# EUROPEAN PATENT APPLICATION

(11) **EP 2 579 336 A1**
(43) Date of publication of application: **10.04.2013**
(21) Application number: 12184609.1
(22) Date of filing: 17.09.2012
(51) Int. Cl.: H01L 31/048

(54) **Terminal box for solar cell module**

(30) Priority: 06.10.2011 JP 2011222115
(71) Applicant: Hosiden Corporation, Yao-shi, Osaka 581-0071 (JP)
(72) Inventor: Ohmori, Yasuhiro, Osaka, Osaka 5810071 (JP)
(74) Representative: Lemcke, Brommer & Partner

(57) **Abstract**

A terminal box for a solar cell module including a terminal box body 1 having an inner bottom surface 3a, a backflow check diode A housed in the terminal box body 1, and a plurality of terminal blocks 6 fixed to the inner bottom surface 3a. The backflow check diode A includes a diode body portion A1 and a pair of leads A2 extending in opposite directions from the diode body portion A1. The leads have bent portions A3 at distal ends A4 thereof, respectively. All the parts of the pair of leads A2 lie in the same plane. Each of the terminal blocks 6 has a connecting portion 11 connected to each of the leads A2. The connecting portion 11 of the terminal block 6 for connecting each of the pair of leads A2 is configured to attach each of the leads A2 thereto to allow the plane to lie along the inner bottom surface 3a.

## Description

### FIELD OF INVENTION

The present invention relates to a terminal box for a solar cell module including a terminal box body, a backflow check diode having a pair of leads, and a terminal block fixed to an inner bottom surface of the terminal box body and connected to the leads.

### RELATED ART

An example of the conventional terminal box for the solar cell module as noted above is disclosed in Japanese Patent No. 4,046,756, in which the backflow check diode (referred to as "diode" hereinafter) has a pair of linear leads extending coaxially in opposite directions from the diode body portion. The terminal block is provided with a pair of connecting portions connected to the leads. The pair of connecting portions are connected to the pair of leads coaxially extending along the inner bottom surface of the terminal box body.

In the conventional terminal box for the solar cell module noted above, the diode body portion and the pair of leads can be arranged along the inner bottom surface of the terminal box body without the diode body portion overlapping the terminal block in the depth direction of the terminal box. Thus, the height of the terminal box in the depth direction can be reduced, compared with an arrangement in which distal ends of the pair of leads that are bent to have symmetric L-shaped portions lie along the depth direction of the terminal box.

On the other hand, in the conventional terminal box for the solar cell module as noted above, the pair of linear leads that are coaxially arranged are connected to the pair of connecting portions, respectively. Therefore, if the lead is stretched or contracted in the axial direction owing to heat generated by the diode body portion, for example, there might occur insufficient connection between the lead and the terminal block resulting from abration caused by fine slide movement between the lead and the connecting portion, or malfunction of the diode resulting from distortion of the diode body portion,

The present invention has been made having regard to the above-noted disadvantages, and its object is to provide a terminal box for a solar cell module that is capable of achieving a reduced height easily and causing insufficient connection between the lead and terminal block or malfunction of a diode less often.

### SUMMARY OF INVENTION

A preferred embodiment of the terminal box for the solar cell module according to the present invention includes a terminal box body having an inner bottom surface; a backflow check diode housed in the terminal box body; and a plurality of terminal blocks fixed to the inner bottom surface, in which the backflow check diode includes a diode body portion and a pair of leads extending in opposite directions from the diode body portion, the leads have bent portions at distal ends thereof, respectively, all the parts of the pair of leads lie in the same plane, each of the terminal blocks has a connecting portion connected to each of the leads, and the connecting portion of the terminal block for connecting each of the pair of leads is configured to attach each of the leads thereto to allow the plane to lie along the inner bottom surface.

With the above-noted arrangement, the diode body portion and the pair of leads can be arranged along the inner bottom surface of the terminal box body without the diode body portion overlapping the terminal block in the depth direction of the terminal box.

Further, even if the lead is stretched or contracted owing to heat generated by the diode body portion, for example, such stretch or contraction can be absorbed as deformation of the bent portion of the lead. Such an arrangement can suppress generation of abrasion caused by fine slide movement between the lead and the connecting portion or distortion of the diode body portion.

In a preferred embodiment of the terminal box for the solar cell module according to the present invention, the bent portions of the pair of leads are bent to the same direction.

With the above-noted arrangement, since the terminal blocks can be arranged close to each other, the terminal box can be miniaturized easily. Further, since the lead can be lengthened, stretch or contraction of the lead can be easily absorbed as deformation of the bent portion of the lead.

In a preferred embodiment of the terminal box for the solar cell module according to the present invention, each of the bent portions is bent at a right angle.

With the above-noted arrangement, the terminal box can be further miniaturized easily.

In a preferred embodiment of the terminal box for the solar cell module according to the present invention, the connecting portion includes a connecting piece for resiliently press the distal end of each lead to electrically connect the lead to the terminal block.

With the above-noted arrangement, the distal end of the lead is inserted into the connecting portion, which allows the distal end to be connected to the connecting portion simply without soldering the distal end and the connecting portion to each other.

In a preferred embodiment of the terminal box for the solar cell module according to the present invention, the distal end of each lead has an engaged portion engageable with the connecting piece.

With the above-noted arrangement, even if an external force such as vibration or shock is applied in a direction in which the distal end of the lead comes off the connecting portion, the engaged portion of the distal end is engaged with the connecting piece, which prevents the distal end of the lead from coming off the connecting portion.

In a preferred embodiment of the terminal box for the solar cell module according to the present invention, the engaged portion is a recess or a projection formed in the distal end of each lead.

With the above-noted arrangement, the recess or projection formed in the distal end of the lead is engaged with the connecting piece, which prevents the distal end from coming off the connecting portion without further machining the engaging piece.

### BRIEF DESCRIPTION OF DRAWING

Fig. 1 is a top plan view showing the interior of a terminal box;
Fig. 2 is an exploded perspective view showing the interior of the terminal box;
Fig. 3 is an exploded perspective view of a terminal assembly;
Fig. 4 is another exploded perspective view of the terminal assembly;
Fig. 5 is a perspective view showing a contacting state between a diode and a terminal block;
Fig. 6 is a sectional view of the terminal block showing a state in which a distal end of a lead is connected to a connecting portion;
Fig. 7 is a sectional view of the terminal box in a state before an external terminal is connected to the terminal block;
Fig. 8 is a sectional view of the terminal box in a state in which the external terminal is connected to the terminal block; and
Fig. 9 is a sectional view of the terminal block showing a state in which the distal end of the lead is connected to the connecting portion in a second embodiment.

### DETAILED DESCRIPTION OF PREFERRED EMBODIMENT

Preferred embodiments of the present invention will be described hereinafter in reference to the accompanying drawings.

### [First Embodiment]

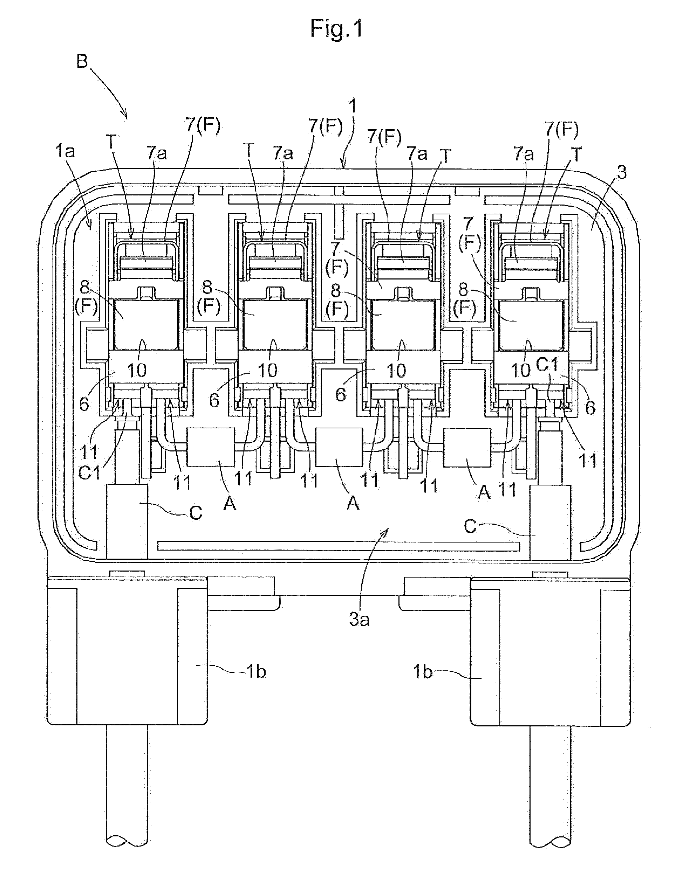

Figs. 1 to 6 show a terminal box B for a solar cell module (referred to as "terminal box B" hereinafter) in the current embodiment. The terminal box B includes a terminal box body 1 made of resin and a lid member 2 made of resin. The terminal box body 1 has an upper opening 1a, and the lid member 2 is configured to close the upper opening 1a of the terminal box body 1. The terminal box body 1 also has a cable retainer 1b integrally formed therewith for receiving and retaining an external connecting cable C.

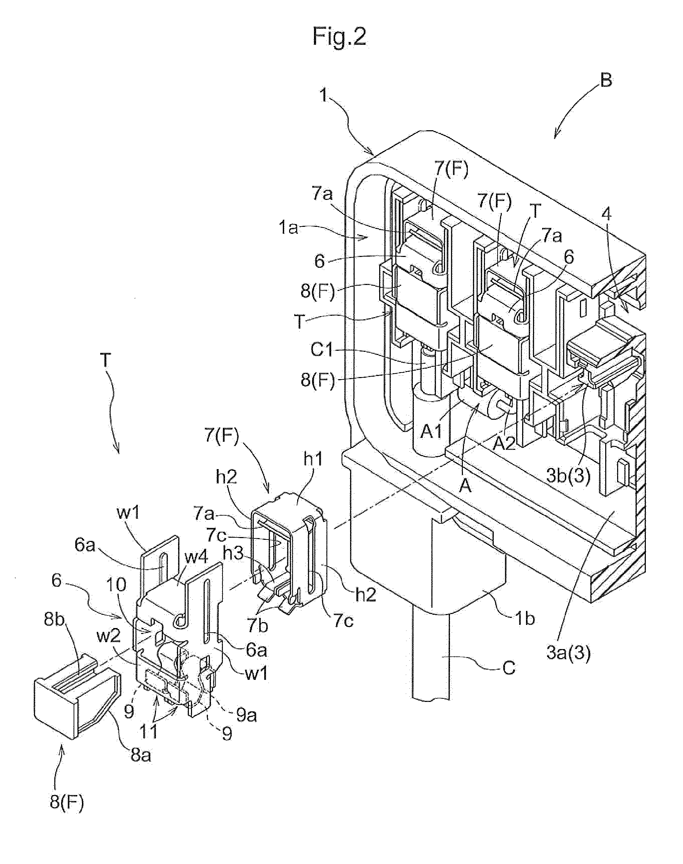

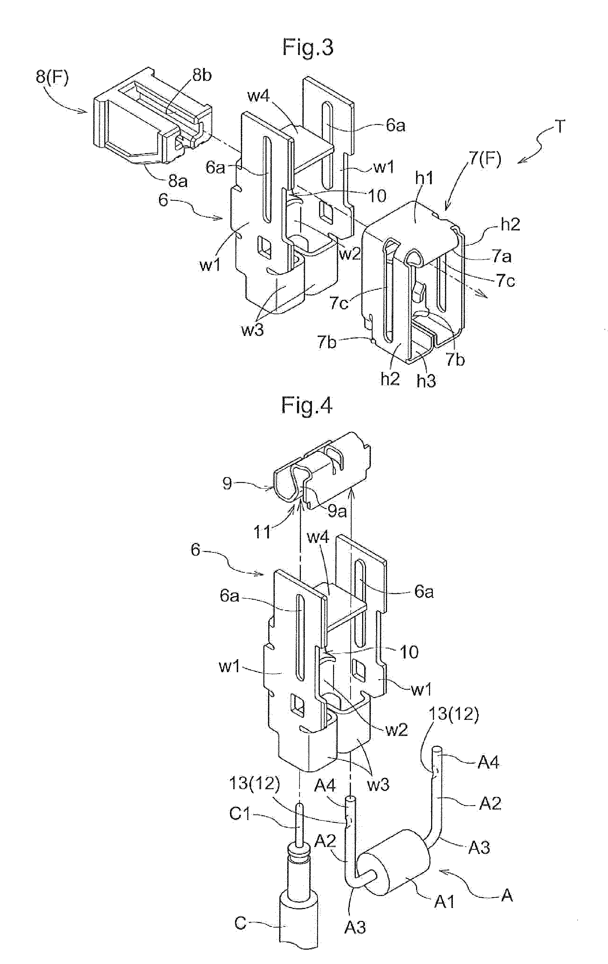

As shown in Figs. 1 and 2, the terminal box body 1 includes a plurality of terminal blocks 6 and bypass diodes A for checking a backflow. Each bypass diode A is configured to electrically connect adjacent terminal blocks 6 to each other. As shown in Fig. 4, the bypass diode A is formed as an axial diode having a cylindrical diode body portion A1 and a pair of round-bar leads A2 extending in opposite directions from the diode body portion A1 to be coaxial with the diode body portion A1. The pair of leads A2 are connected to two adjacent terminal blocks 6, respectively.

Each of the leads A2 has a bent distal end A4 so that all the parts of the pair of leads A2 are positioned in the same plane. More particularly, the pair of leads A2 have bent portions A3 that are bent toward the same direction at right angles to allow their axes to lie in the same plane.

As shown in Figs. 2, 7 and 8, a plurality of openings 4 are formed in a bottom plate 3 of the terminal box body 1 for introducing an external terminal 5 of the solar cell module (not shown) into the interior of the terminal box body 1. The external terminal 5 introduced into the interior of the terminal box body 1 through the opening 4 and a core wire C1 of the cable C inserted into the cable retainer 1b and introduced into the interior of the terminal box body 1 are electrically connected to the terminal block 6.

The terminal box body 1 includes a movable control portion F for switching between a connecting state for electrically connecting the external terminal 5 introduced through each opening 4 and the terminal block 6 and a non-connecting state for disconnecting the external terminal 5 from the terminal block 6. The movable control portion F has a retainer member 7 made of sheet metal and a wedge member 8 made of resin for sliding the retainer member 7 in a direction along a plate surface of the bottom plate 3 as movable control members. The retainer portion 7 has a pressing portion 7a for bringing the external terminal 5 into pressure-contact with the terminal block 6 for electric connection.

The terminal block 6, the retainer member 7 and the wedge member 8 are assembled to form a terminal assembly T. A plurality of terminal assemblies T are arranged in parallel in the terminal box body 1. Each of the terminal assemblies T corresponds to each of the openings 4.

Each terminal assembly T is attached to the terminal box body 1 by fixing the terminal block 6 to an inner bottom surface 3a of the bottom plate 3. The terminal blocks 6 of adjacent terminal assemblies T are electrically connected, to each other through the bypass diode A. Further, the core wire C1 of the cable C is electrically connected to each of the terminal blocks 6 of the terminal assemblies T positioned at opposite sides of the box body.

The plurality of terminal assemblies T have the same construction, one of which will be described hereinafter.

The retainer member 7 is made of sheet metal and has two long-side peripheral wall portions h2 opposed to each other and two short-side peripheral wall portions h1 and h3 opposed to each other. The short-side peripheral wall portions h1 and h3 are configured to join the two long-side peripheral wall portions h2 together. With such an arrangement, the retainer member 7 has a rectangular tubular end portion opened in a rectangular shape. The retainer member 7 is assembled to the terminal block 6 to freely slide and move in a longitudinal direction of the long-side peripheral wall portions h2 with wall surfaces of all the peripheral wall portions h1 to h3 being arranged along a depth direction of the torminal box body 1.

The short-side peripheral wall portion h1 is turned inward of the tube to form the bent pressing portion 7a. The pressing portion 7a is configured to be resiliently pivotable about a bent portion along the longitudinal direction of the long-side peripheral wall portions h2 (sliding direction of the retainer member 7). On the other hand, the short-side peripheral wall portion h3 has a pair of slanting plate portions 7b inclined outward of the tube. Those slanting plate portions 7b receive inclined wedge surfaces 8a of the wedge member 8 in a surface contact state.

Each long-side peripheral wall portion h2 has a slot 7c extending in the longitudinal direction of the long-side peripheral wall portion h2. A fitting projection 6a provided in the terminal block 6 is fitted into the slot 7c. With such an arrangement, the retainer member 7 is assembled to the terminal block 6 to freely slide and move in a longitudinal direction of the slot 7c.

The terminal block 6 is made of a conductive metal plate and has a pair of support wall portions w1, a connecting wall portion w2, a pair of bent wall portions w3 and a connecting plate portion w4 as shown in Figs. 2 to 4, The pair of long-side peripheral wall portions h2 of the retainer member 7 slidably come into contact with the pair of support wall portions w1. The connecting wall portion w2 is configured to connect side portions of the support wall portions w1 to each other. The bent wall portions w3 are bent toward the connecting wall portion w2 in U-shape in first end sides of the support wall portions w1. The connecting plate portion w4 is inserted between the pair of support wall portions w1 in second end sides of the support wall portions w1. An opening 10 is formed between the connecting wall portion w2 and the connecting plate portion w4 for receiving the wedge member 8.

The fitting projection 6a is formed in each of the support wall portions w1 to fit into the slot 7c of the retainer member 7 from the outside. A pair of connecting portions 11 are provided in a first end side of the terminal block 6, each of which is electrically connected to the core wire C1 of the cable C or the lead A2 of the bypass diode A.

As shown in Fig. 4, the connecting portions 11 are formed by a connecting piece 9 made of sheet metal having a generally S-shaped section and fixedly engaged with the inner side of the pair of bent wall portions w3. The core wire C1 or lead A2 is attached to each of the above-structured connecting portions 11 along the inner bottom surface 3a of the bottom plate 3.

More particularly, the connecting piece 9 has a pair of pressing portions 9a in an intermediate portion of the S-shaped section, each of which is configured to press the core wire C1 or the distal end A4 of the lead A2 toward the inner surface of each bent wall portion w3. Each of the pressing portions 9a enters the inside of each of the bent wall portions w3, thereby to form the pair of connecting portions 11.

When the core wire C1 or the distal end A4 of the lead A2 is not inserted between the pressing portion 9a and the bent wall portion w3, a gap between the pressing portion 9a and the bent wall portion w3 becomes smaller than a diameter of the core wire C1 or the lead A2.

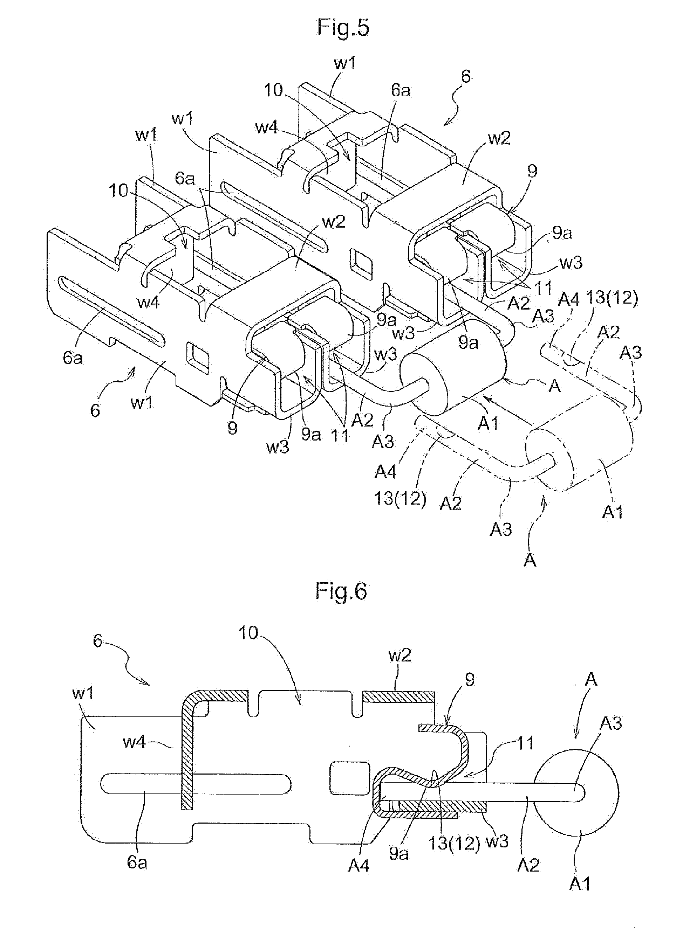

When the core wire C1 or the lead A2 is connected to the terminal block 6, the core wire C1 or the distal end A4 of the lead A2 is inserted between the pressing portion 9a and the bent wall portion w3 to extend along the inner bottom surface 3a of the bottom plate 3 as shown in Fig. 5. More particularly, the pair of leads A2 are inserted to allow the plane on which the leads A2 lie to extend along the inner bottom surface 3a. In this time, the connecting piece 9 is resiliently compressed and deformed while the core wire C1 or the distal end A4 of the lead A2 is resiliently pressed against the bent wall portion w3 by a resilient restoring force. As a result, the terminal block 6 is electrically connected to the core wire C1 or the lead A2.

As shown in Fig. 6, each connecting portion 11 has an engaged portion 12. The distal end A4 of the lead A2 is inserted into the connecting portion 11 to allow the distal end A4 and the engaging piece 9 to be engaged with each other, which prevents the lead A2 from disengaging from the connecting portion 11. In the current embodiment, the engaged portion 12 is formed as a recess portion 13 formed in the distal end A4 of the lead A2. The pressing portion 9a of the connecting piece 9 is engaged with the recess portion 13. The recess portion 13 is formed by presswork for deforming part of the distal end A4 to a recessed shape or by cutting off part of the distal end A4.

The retainer member 7 is assembled to the terminal block 6 to allow the connecting plate portion w4 to be inserted between the pair of long-side peripheral wall portions h2. In this time, a pressing force of the pressing portion 7a acts on the connecting plate portion w4. The pressing force allows the external terminal 5 to come into contact with the connecting plate portion w4, thereby to electrically connect the external terminal 5 to the terminal block 6.

As shown in Figs. 2 and 3, the wedge member 8 has the slanting wedge surfaces 8a coming into slide-contact with the slanting plate portions 7b of the retainer member 7, and a rail groove 8b into which a rail portion 3b integrally formed with the bottom plate 3 is fitted. The wedge member 8 is assembled to freely slide and move in the depth direction of the terminal box body 1 along the rail portion 3b.

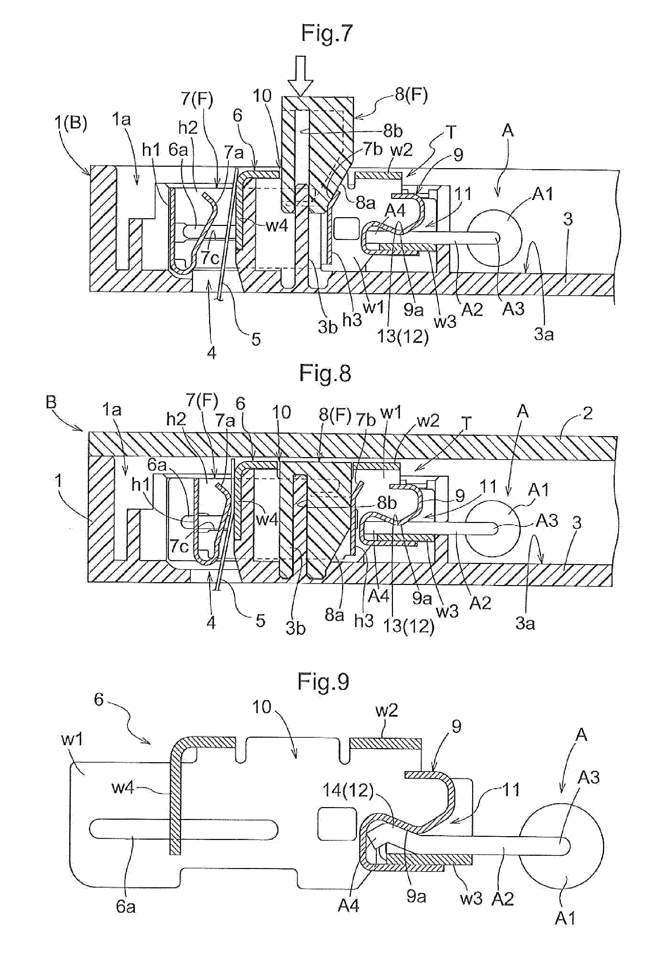

A process for connecting the external terminal 5 to the terminal block 6 will be described hereinafter. As shown in Fig. 7, the external terminal 5 is introduced into the inside of the terminal box body 1 through the opening 4 and inserted between the pressing portion 7a and the connecting plate portion w4 that are spaced from each other. Then, as shown in Fig. 8, the wedge member 8 is pushed in to allow the rail portion 3b to fit into the rail groove 8b. Here, the slanting wedge surface 8a comes into surface contact with the slanting plate portion 7b, and the retainer member 7 is slid and moved to allow the pressing portion 7a to press the external terminal 5 toward the connecting plate portion w4. As a result, the external terminal 5 is held between the pressing portion 7a and the connecting plate portion w4, in which the external terminal 5 is electrically connected to the terminal plate 6 (connecting plate portion w4).

### [Second Embodiment]

Fig. 9 shows another embodiment of the terminal box B for the solar cell module according to the present invention.

In the current embodiment, a projection 14 acting as the engaged portion 12 is formed in the distal end A4 of the lead A2. The projection 14 is formed by bending the distal end A4 to project in a direction distant from the bent wall portion w3. The remaining structures are the same as those in the first embodiment.

### [Other Embodiments]

[1] In the above embodiment, each of the pair of leads A2 has the bent portion bent at a right angle. Instead, the bent portion may form any angle other than the right angle.
[2] In the above embodiment, the distal end A4 of the lead A2 is connected to the terminal block 6 by the pressing force of the connecting portion 11. Instead, those may be connected to each other by soldering.

## Claims

1. A terminal box for a solar cell module comprising:
a terminal box body (1) having an inner bottom surface (3a);
a backflow check diode (A) housed in the terminal box body (1); and
a plurality of terminal blocks (6) fixed to the inner bottom surface (3a);
**characterized in that**
the backflow check diode (A) includes a diode body portion (A1) and a pair of leads (A2) extending in opposite directions from the diode body portion (A1),
the leads have bent portions (A3) at distal ends (A4) thereof, respectively,
all the parts of the pair of leads (A2) lie in the same plane,
each of the terminal blocks (6) has a connecting portion (11) connected to each of the leads (A2), and
the connecting portion (11) of the terminal block (6) for connecting each of the pair of leads (A2) is configured to attach each of the leads (A2) thereto to allow the plane to lie along the inner bottom surface (3a).

2. The terminal box for a solar cell module as defined in claim 1, **characterized in that** the bent portions (A3) of the pair of leads (A2) are bent to the same direction.

3. The terminal box for a solar cell module as defined in claim 2, **characterized in that** each of the bent portions (A3) is bent at a right angle.

4. The terminal box for a solar cell module as defined in any one of claims 1 to 3, **characterized in that** the connecting portion (11) includes a connecting piece (9) for resiliently press the distal end (A4) of each lead (A2) to electrically connect the lead (A2) to the terminal block (6).

5. The terminal box for a solar cell module as defined in claim 4, **characterized in that** the distal end (A4) of each lead (A2) has an engaged portion (12) engageable with the connecting piece (9).

6. The terminal box for a solar cell module as defined in claim 5, **characterized in that** the engaged portion (12) is a recess (13) or a projection (14) formed in the distal end (A4) of each lead (A2).
